# EUROPEAN PATENT SPECIFICATION

(11) **EP 3 094 185 B1**
(45) Date of publication and mention of the grant of the patent: **14.03.2018**
(21) Application number: 15702594.1
(22) Date of filing: 19.01.2015
(51) Int. Cl.: A22C 13/00

(54) **FOOD PRODUCT AND METHOD OF PREPARATION**
LEBENSMITTELPRODUKT UND VERFAHREN ZUR HERSTELLUNG
PRODUIT ALIMENTAIRE ET SON PROCÉDÉ DE PRÉPARATION

(30) Priority: 17.01.2014 NL 2012103
(43) Date of publication of application: 23.11.2016
(73) Proprietor: Devro (Scotland) Ltd, Chryston Central Scotland G69 0JE (GB)
(72) Inventor: VISSER, Petrus Rimke, NL-6691 EE Gendt (NL)
(74) Representative: HGF Limited
(86) International application number: PCT/NL2015/050031
(87) International publication number: WO 2015/108421

(56) References cited:
- WO-A1-2011/087359
- US-A1- 2009 061 051
- US-A1- 2010 047 400

## Description

### BACKGROUND OF THE INVENTION

The invention is in the field of food products. In particular, the invention pertains to food products, especially sausages, and food casings, especially sausage casings.

Food casings based on collagen are known in the art and have been used for decades. EP-A-1 893 030 describes a method for preparing food products by means of co-extrusion, as well as food products obtained by the process. In this document, the method is described using a meat mass and a casing mass which is liquid prior to co-extrusion, and that the casing mass comprises collagen and alginate. EP-A-1 893 030 also describes that the extrusion of the casing of the food product takes place by means of an extrusion nozzle which generates shear forces in the casing mass, also in the direction transversely to the direction of extrusion. The co-extruded food product is then described as being brought into contact with a calcium salt solution. This treatment results in the casing (also referred to herein as covering or skin) gelating which increases the strength of the casing.

A disadvantage of this method, in particular for fresh food products, is that within a few days of being refrigerated the calcium cations migrate into the interior of the food product resulting in a slimy skin and seriously impairing the cooking properties of the food product. A further disadvantage is that myoglobin in the meat mass tends to migrate to the surface of the food product, which results in discoloration of the skin. Such changes in the appearance of the skin are typically not well received by consumers, since discoloration of and slimy coatings on meat products are typically associated with food spoilage.

GB-A-1 232 801 describes the preparation of collagen-coated foodstuffs by co-extrusion. The collagen-coatings as described in GB-A-1 232 801 are subjected to frictional forces acting in a direction about the axis of extrusion. This results in the orientation of the collagen fibers, which strengthens the coating.

GB-A-1 040 770 describes a method of preparing food casings by extruding a mixture of collagen and alginate. An aqueous calcium salt solution is used to set the extruded mixture, after which it is inflated by air and filled with for instance sausage meat. GB-A-1 040 770 does not describe using co-extrusion to produce a food product.

EP-A-0 821 878 describes using different types of collagen blends to produce casings by co-extrusion for food products.

WO-A-02/15715 describes a composition for coating foodstuffs comprising a first polysaccharide that is negatively charged in the composition and gels under the influence of cations, wherein the composition further comprises at least a second polysaccharide which is neutral in the composition. WO-A-02/15715 also describes that a preferred composition comprises alginate and galactomannans. The disadvantage of this casing is that it loses its strength over time.

WO-A-2011/087359 describes the use of two casing layers of which the first layer is sandwiched between the meat mass and a second layer. A drawback of the first layer of WO-A-2011/087359 is that it comprises a calcium salt that is poorly soluble in water but not totally insoluble. Sufficient calcium ions are in solution and calcium alginate is formed, resulting in poor adhesion between the layers. Moreover, the first layer does not prevent depletion of calcium cations from the outer layer.

US-A-2010/0047400 describes the use of two collagen layers used in the production of food products. The first layer is positioned between the outer layer and the food dough and does not prevent migration of calcium cations but merely serves to contain flavoring or coloring additives.

The invention seeks to improve the known casing compositions by making them more durable, in particular so that the fresh food products may be refrigerated or frozen for a longer period of time without changing in appearance.

### BRIEF SUMMARY OF THE INVENTION

It is an object of the present invention to provide a method of manufacturing a co-extruded food product, with improved properties of the skin.

The invention provides a method according to claim 1 for preparing a food product by means of co-extrusion wherein a barrier layer is provided between an edible filler and a casing layer. In this way, the barrier layer acts to prevent or delay the migration of both calcium cations and myoglobin in the co-extruded food product. The resulting food products obtained by the method of the invention have an improved casing which may allow refrigeration for a longer period of time without discoloration and/or deterioration of the appearance of slimy coatings.

Further, the invention provides for a food product, according to claim 8, comprising an edible filler, a casing layer, and a barrier layer, wherein the edible filler is covered by the barrier layer at least partly, and wherein the barrier composition is covered by the casing layer at least partly. By providing the barrier layer between the edible filler and the casing layer, discoloration of the casing layer and/or the edible filler can be counteracted.

### BRIEF DESCRIPTION OF THE FIGURES

By way of non-limiting examples only, embodiments of the present invention will be described below with reference to the accompanying Figures in which:
Figure 1 shows a schematic perspective view of a nozzle of a three-layer extruder; and
Figure 2 shows a schematic cross-section of the nozzle of Figure 1, and a food product 2 extruded by means of said nozzle.

### DETAILED DESCRIPTION OF THE INVENTION

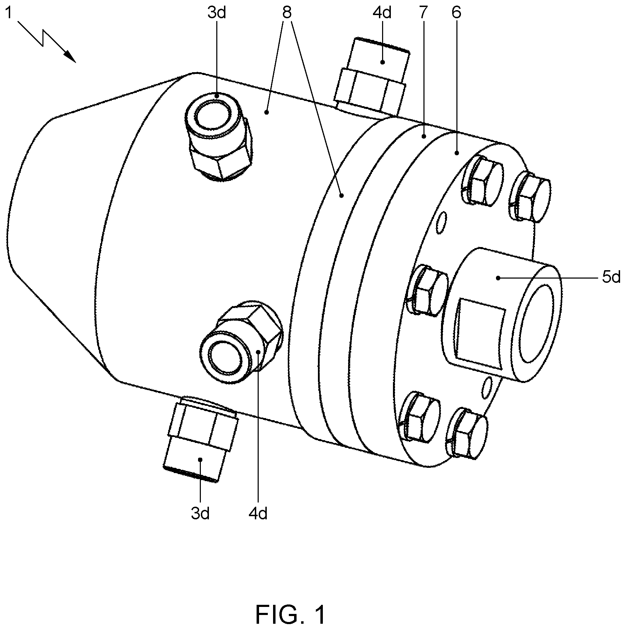

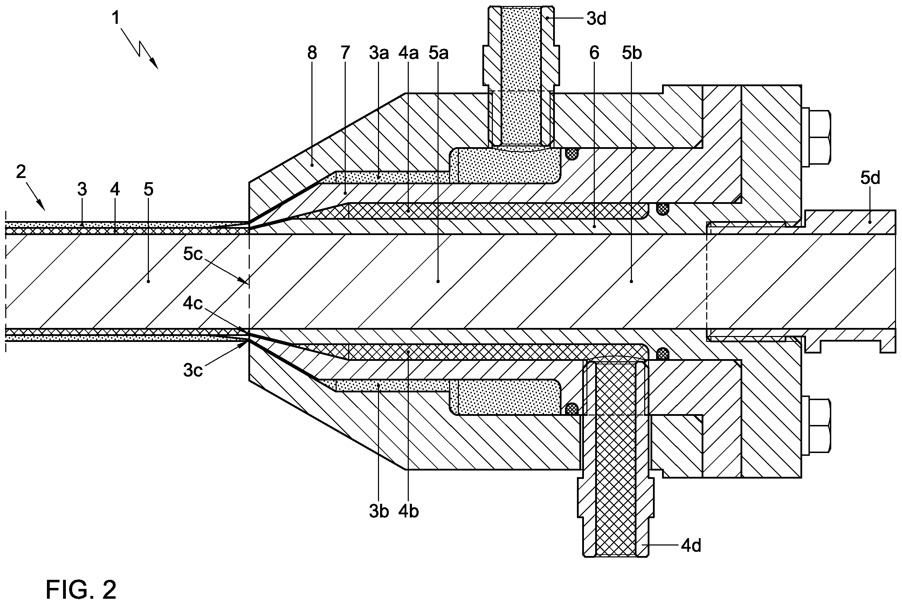

Figure 1 shows a schematic perspective view of a nozzle 1 of a three-layer extruder, and Figure 2 shows a schematic cross-section of said nozzle 1. Figure 2 further shows a part of a food product 2 extruded by means of said nozzle 1.

In a first aspect, the present invention is directed to a method for preparing a food product by means of co-extrusion. Preferably, the co-extrusion is carried out using a three-layer extruder, such as for instance an extruder provided with the nozzle 1 of Figures 1 and 2. However, in alternative embodiments another extruder and/or another nozzle may be used, such as an extruder and/or a nozzle suitable for co-extruding more than three layers 3, 4, 5. For example, a four-layer extruder and a corresponding nozzle can be used, especially when it is desired that the food product 2 has an edible filler 5 comprising multiple layers itself, for instance a meatloaf-like layer surrounding a ham-like core layer.

As can be seen best in Figure 2, a casing composition 3a and a barrier composition 4a are co-extruded as substantially co-axially layers 3, 4 upon an edible filler 5, 5a. Hence, the edible filler 5, 5a is provided with a casing layer 3 and a barrier layer 4, such that said barrier layer 4 of the co-extruded food product 2 is present between the edible filler 5 and the casing layer 3.

Surprisingly it was found that the combination of the co-extrusion with the casing composition 3a and barrier composition 4a results in a food product 2 with a casing layer 3 which retains its strength and appearance for a surprisingly long time.

The extruder and/or its nozzle 1 can be arranged for extruding a substantially elongated, preferably substantially cylindrical, more preferably substantially circular cylindrical, food product 2. As shown in Figure 2, the nozzle 1 can comprise a central part 6 provided with a bore 5b defining a first feed path 5b for feeding edible filler material 5 to a first outlet opening 5c. The nozzle 1 may further comprise an outer part 8 and an intermediate part 7 provided between the central part 6 and the outer part 8. Between the central part 6 and the intermediate part 7 a second feed path 4b can be formed for feeding the barrier composition 4a to a second outlet opening 4c, and between the intermediate part 7 and the outer part 8 a third feed path 3b can be provided for feeding the casing composition 3a to a third outlet opening 3c.

Here, the bore 5b is of substantially circular cylindrical design. The second feed path 4b can have an annular cross-section and may surround the bore 5b. The third feed path 5b can have an annular cross-section with a larger diameter than the second feed path 4b and surrounds said second feed path 4b. The feed paths 5b, 4b, 3b are in fluid connection to their respective outlet openings 5c, 4c, 3c, which may be arranged co-axially with respect to each other, preferably in a substantially flat plane.

A first outlet opening 5c connected to the first feed path 5b can have a substantially circular cross-section, preferably having a diameter between 5 mm and 100 mm, more preferably between 5 mm and 50 mm, especially between 10 mm and 35 mm, such about 11, 13, 15, 17, 19, 22, 24, 26 or 28 mm.

A second outlet opening 4c connected to the second feed path 4b and a third outlet opening 3c connected to the third feed path 3b may each be shaped as a substantially annular slit. Preferably, the width of said slits is relatively small with respect to the radius of the first outlet opening 5c. For instance, the width of at least one and preferably both slits can be between 0.05 mm and 1 mm, preferably between 0.1 mm and 0.8 mm, such as about 0.2 mm, 0.3 mm, 0.4, 0.5 or 0.6 mm. For example, the radius of the first outlet opening 5c can be about 15 mm, the width of the slit of the second outlet opening 4c can be about 0.3 mm, and/or the width of the third outlet opening 3c can be about 0.4 mm.

As noted above, the second and third openings 4c, 3c may each have a substantially annular cross-section. Preferably, each of said cross-sections can have a diameter being smaller than the diameter of the cross-section of the corresponding feed path. The second outlet opening 4c can be offset from the first opening 5c over a relative small distance, e.g. less than 3 mm, such that the barrier composition 4a extruded from said opening 4c can form a barrier layer 4 coating the edible filler 5a extruded from the first opening 5c. Further, the third outlet opening 5c may be offset from the second opening 4c over a relative small distance, e.g. less than 3 mm, such that the casing composition 3a extruded from said opening 3c can form a casing layer 3 covering the barrier composition 4a extruded from the second opening 4c simultaneously. In alternative embodiments, the feed paths 5b, 4b, 3b and/or the outlet openings 5c, 4c, 3c can have non-circular cross-sections, for instance substantially elliptical, rectangular, square, triangular or star-shaped cross-sections. Preferably, the three feed paths 5b, 4b, 3b may have cross-sections having a corresponding shape.

In the embodiment shown in Figures 1 and 2, the central, intermediate, and outer nozzle parts 6, 7, 8 are provided stationary with respect to each other. However, in other embodiments, at least one of the nozzle parts may be arranged rotatable with respect to at least one of the other parts. For instance, the central nozzle part 6 may be arrange to rotate with respect to the intermediate and outer nozzle parts 7, 8. By rotating the central nozzle part 6 with respect to the intermediate nozzle part 7 during extrusion, the barrier composition 4 fed through the second feed path 4b can be helically moved. As a result, a barrier layer 4 can be extruded in which an orientation, e.g. the orientation of collagen fibers of the collagen comprised in the barrier composition 4a, can be at an angle with the longitudinal direction of the food product 2.

Alternatively or additionally, the orientation of collagen fibers can be controlled by other means. For example, an outer side of the central part 6 and/or an inner side of the intermediate part 7 may be provided with a helix-shaped guide for guiding at least a part of the barrier composition 4 fed through the second feed path 4b in a helical direction, such as to orient at least a part of the collagen fibers of the collagen comprised in the barrier composition 4a at an angle with the longitudinal direction of the food product 2. The helix-shaped guide may for instance comprise helically guiding ribs or ridges and/or helically grooves. When both the outer side of the central part 6 and the inner side of the intermediate part 7 are provided with a respective helix-shaped guide, both helix-shaped guides are preferably oriented in the same direction, i.e. both helices are right-handed or both are left-handed helices. It is noted, however, that walls defining the second feed path 4b do not need to be provided with a guide, but that the outer side of the central part 6 and/or the inner side of the intermediate part 7 may be substantially smooth.

As can be seen in Figure 2, the nozzle 1 can be provided with connectors 3d, 4d, 5d for fluidly connecting the respective feed paths 3b, 4b, 5b with respective supply lines (not shown) for feeding the casing composition 3a, barrier composition 4a, and edible filler 5a, respectively, to said respective feed paths. Here, the nozzle 1 comprises one first connector 5d for connecting the first feed path 5b to a first supply line for supplying edible filler 5a. Further, the nozzle 1 comprises three, preferably regularly interspaced, second connectors 4d for connecting the second feed path 4b to three second supply lines for supplying barrier composition 4a, and three, preferably regularly interspaced, third connectors 3d for connecting the third feed path 3b to three third supply lines for supplying casing composition 3a. Alternatively, the nozzle 1 may comprise another number of first, second and/or third connectors.

Furthermore, the extruder can be provided with one or more distributors, for instance rotatable screws provided in the supply lines, for forcing the casing composition 3a, barrier composition 4a, and edible filler 5a, respectively, through the respective supply lines, feed paths, and outlet openings.

It is noted that the casing composition 3a typically comprises collagen, a polysaccharide, such as for instance alginate, and water. Collagen is a protein and is an accepted additive in the food industry. Collagen can be obtained from diverse animal origins which may include cattle, sheep, poultry and/or swine. Preferably, the collagen used is obtained from cattle, in particular from partially deamidated cattle hide splits, or porcine skins. The amount of collagen is commonly expressed by measuring the weight of nitrogen (N) and multiplying it with 5.52. Typically the amount of collagen protein, used in the casing composition of the present invention, based on N x 5.52, is between 2 and 7 wt.%, and preferably between 2.5 and 6 wt.%, more preferably between 2.7 and 5.5 wt.%, such as about 2.9 wt.%, 4 wt.% or 5 wt.%.

All ratios and percentages as used herein are based on weight, unless specified otherwise.

The term "polysaccharide", as used herein, also includes salts and acids of polysaccharides, as well as combinations thereof. Suitable polysaccharides which may be used include gelling polysaccharides, such as alginate, pectin, carrageenan, konjac gum, agar and/or gellan gum. Preferably, the polysaccharide used is alginate. Typically an alginate salt is used in the casing composition such as sodium, potassium and/or ammonium alginate. In a preferred embodiment, sodium alginate is used. Typically the amount of the polysaccharide used in the casing composition is between 1 and 5 wt.%, preferably between 2 and 4 wt.%.

The casing composition may also comprise additives, such as wetting agents (such as glycerol, propylene glycol, edible oil and/or ethanol); colorants; aromatic substances; flavorings; preservatives; cross-linking agents; chelating agents (such as EDTA, ethylenediamine, dimercaprol and/or citrates); and/or, antimicrobial agents.

The casing composition preferably comprises between 0-10 wt.% of a liquid smoke derivative as a antimicrobial agent and/or a cross-linking agent. The cross-linking property of the liquid smoke derivative acts to increase the stability of the casing by cross-linking the collagen, while the antimicrobial property inhibits bacterial growth. Preferably, the casing composition comprises at least 1 wt.%, and more preferably at least 3 wt.% of a liquid smoke derivative. Typically the amount of liquid smoke is less than 6 wt.%.

The barrier composition of the invention typically comprises a thickening agent; a metal salt; water; an edible oil and/or fat.

Suitable thickening agents which may be used in the barrier composition 4a include polysaccharides (such as starches, vegetable gums, and/or pectin) and/or proteins.

Polysaccharides which may be used in the barrier composition 4a include, in particular, agar, carrageenan, cassia gum, carboxy methyl cellulose (CMC), gellan gum, guar gum, konjac gum, locust bean gum, methyl cellulose, hydroxy propyl methyl cellulose (HPMC), pectin, starch, glucomannan, galactomannan in combination with xanthan gum, galactomannan in combination with carrageenan, galactomannan in combination with agar-agar, glucomannan in combination with xanthan gum, and combinations thereof. Preferably, the polysaccharide used is methyl cellulose, CMC, HPMC and/or guar gum.

Proteins which may be used in the barrier composition 4a include collagen, such as collagen as mentioned hereinabove, egg proteins, whey proteins and/or gelatin.

Preferably, the thickening agent used is a polysaccharide. Typically the amount of thickening agent used in the barrier composition 4a is between 0.1 and 10 wt.%, and preferably between 1 and 5 wt.%.

Suitable edible oils and/or fats which may be used in the barrier composition 4a include soybean oil, sunflower oil, rapeseed oil, safflower oil, corn oil, palm oil, canola oil, peanut oil, sesame seed oil, olive oil, flax seed oil, coconut oil, hydrogenated vegetable fat, animal-based oils like lard, butter, ghee, fish oil, pig fat and combinations thereof. Typically the amount of edible oil and/or fat which may be used in the barrier composition 4a is between 5 and 45 wt.%.

If fat and/or oils are used, preferably an emulsifier such as Na caseinate and/or dried collagen powder, such as Kapro (*e.g*. Kapro P100) are used as well.

Metal salts suitable to be used in the barrier composition 4a include calcium salts, such as calcium chloride, calcium carbonate, calcium lactate and/or calcium acetate and magnesium salts, such as magnesium chloride, magnesium acetate, magnesium lactate and/or magnesium carbonate. Preferred metal salts are calcium chloride, calcium lactate, calcium acetate, magnesium chloride, magnesium acetate, magnesium lactate. The amount of metal salt typically used in the barrier composition 4a is between 2 and 10 wt.%.

In a preferred embodiment, the barrier composition is in the form of an emulsion, in particular a water-in-oil emulsion. This provides for a very good adherence between the barrier and casing layers.

The advantage of the metal salt, in particular a calcium salt, being present in the barrier composition 4a is that it acts to gelate the composition. This can either occur quickly, in the case when calcium chloride is used, or at a more delayed rate, when calcium carbonate is used.

Preferably, the metal salt is well-soluble in water to obtain good adherence between the barrier layer and the casing layer. Typically, metal salts with a water solubility of at least 2 g/L are used. Preferably, metal salts with solubility in water of at least 10 g/L, more preferably at least 50 g/L, are used. Even more preferred are metal salts with a solubility of more than 200 g/L. Water solubility herein is expressed as the maximum amount of metal salt in gram that dissolves in 1 L water at 20 °C and atmospheric pressure.

The barrier composition 4a may also comprise additives, such as any of the above-mentioned additives which are suitable to be used in the casing composition, as well as emulsifiers (such as sodium caseinate, lecithin, sodium stearoyl lactylate, calcium stearoyl lactylate, esters of monoglycerides of fatty acids, mono- and diglycerides of fatty acids, dioctyl sodium sulphosuccinate, sucrose esters of fatty acids, polyethylene glycol (PEG) and the like) and pH regulators (such as lactic acid, acetic acid and/or hydrochloric acid).

The barrier composition 4a may either be in the form of a mixture or an emulsion. Preferably, the barrier composition is an emulsion of water in fat and/or oil, wherein preferably an emulsifier is used. Preferred emulsifiers are those commercially available from Palsgaard®, such as Citrem 3212™ and PGPR 4175™.

The viscosity of the casing composition and the barrier composition 4a is typically about 10 mPa·s, as measured by a Brookfield viscometer using a spindle no. 2 at 100 rpm and at a temperature of 20 °C. An edible filler 5, 5a which can be coated with the barrier and casing compositions 4a, 3a according to the method of the present invention includes, for example, paste-like food preparations 5a, preferably for the production of various types of sausages and other food products 2, especially meat and fish products 2. Additionally or alternatively, the edible filler 5, 5a may comprise any suitable edible ingredients, such as for instance vegetables, fruit, nuts and/or cheese.

It is advantageous that at least during the co-extrusion the casing composition 3a and/or the barrier composition 4a can have a pH between 3.0 and 7.5, preferably between 4.0 and 6.0, and more preferably between 4.0 and 4.5. The pH can be controlled by the addition of a suitable acid, such as lactic acid, acetic acid and/or hydrochloric acid.

Advantageously, the method comprises a step of bringing the co-extruded food product 2 into contact with a solution of a metal salt after, especially directly after, the co-extrusion, e.g. by immersion or spraying, so as to gelate the casing layer 3 or so-called skin. Suitable metal salts which may be used are alkaline-earth metal salts. According to the invention, the metal salt used comprises a calcium salt, such as calcium chloride, calcium lactate and/or calcium acetate and more preferably calcium chloride. The amount of the metal salt used in the solution is between 0.1 and 20 wt.%, preferably between 5 and 15 wt.%, such as about 10 wt.% of the metal salt, and in particular about 10 wt.% of calcium chloride.

It has been found that optimal results are obtained when the casing layer 3 of the co-extruded food product 2 is contacted with a solution of a metal salt at a temperature of between 0 and 40 °C, and for a period of at least 10 seconds, and preferably at least 20 seconds and more preferably at least 40 seconds, for instance between 45 and 60 seconds.

In another aspect, the co-extruded food product 2 is dried and subsequently brought into contact with a solution of a liquid smoke derivative e.g. by immersion or spraying. This further method step can be particularly suitable for producing hot dogs as the food product 2.

In another aspect, the present invention is directed to a food product 2, obtained by the method of the present invention. The food product 2 comprises an edible filler 5, a casing layer 3, and a barrier layer 4, wherein the edible filler 5 is covered by the barrier layer 4 at least partly, preferably substantially completely. Further, the barrier layer 4 is coverer by the casing layer 3 at least partly, preferably substantially completely. The food product 2 can be a semi-finished product, such a continuous sausage, which may be cut into multiple food products, such as sausages.

An advantage of such food product 2, obtained by the method of the present invention, is that it may be stored under refrigeration for a longer period without changing in appearance. For example, this may be for a period of up to 21 days. This is an improvement upon known methods, for example as described in EP-A-1 893 030, which produce food products that normally last less than one week, and typically for only a day or two.

A further advantage of such food product 2, obtained by the method of the present invention, is that when the food product 2 is boiled or fried, the properties of the casing layer 3 e.g. flexibility, strength and elasticity, can be substantially retained.

It is noted that the food products 2 may include various types of sausages and other meat and fish products. Preferably the food product 2 is a sausage. Examples of various types of sausages include breakfast sausages, chipolata sausage and fresh sausage.

The food product 2 may be stored by cooling, either by refrigeration or freezing to prevent deterioration of the fresh food product.

The invention is not restricted to the embodiments described above. It will be understood that many variants are possible.

Such embodiments will be apparent to the person skilled in the art and are considered to lie within the scope of the invention as formulated by the following claims.

The present invention will be illustrated by the following examples, which are not intended to limit the scope of the present invention.

### Examples

### Example 1

37.5 grams of Citrem 3212™ and PGPR™ were each dissolved in 1175 grams of sunflower oil.

250 grams of calcium chloride was dissolved in 1000 grams of water.

The calcium chloride solution was emulsified in the oil/ emulsifier mixtures in a bowl cutter and 7500 grams of bovine collagen fibres at 5% protein were dispersed in the emulsion. Acetic acid was added to reach a pH of 4.3. The resulting dispersion was run through a Stephan micro cutter and subsequently deaerated in de vacuum mixer.

This composition was used to make a barrier layer in a sausage by feeding it to an extruder as depicted in figure 1.

The casing was prepared by feeding a composition comprising sodium alginate, collagen fibers, liquid smoke derivative and acidulants to the extruder.

The extrudate was fed through a 10% solution of calcium chloride in water, thus producing a sausage.

The sausage thus produced was of excellent quality, in particular with respect to color and firmness of the skin. After two weeks of refrigerated storage the puncture strength of the skin was still at 80% of the value immediately after extrusion, and the surface color was substantially unchanged.

### Example 2

Example 1 was repeated with a different composition for the barrier layer.

A barrier layer composition comprising 2% HPMC, 4% Kapro P100, 5% CaCl₂ and balance water was prepared in a bowl cutter as follows.

CaCl₂ was dissolved in the water at 20 °C. The HPMC and Kapro were added and the bowl cutter was run until all components were well distributed and dispersed. Acetic acid was added to reach a pH of 4.3 The contents of the bowl cutter were then transferred to a vacuum mixer for deaeration. This composition was used to make a barrier layer in a sausage by feeding it to an extruder as depicted in figure 1.

The casing was prepared by feeding a composition comprising sodium alginate, collagen fibers, liquid smoke derivative and acidulants to the extruder.

The extrudate was fed through a 10% solution of calcium chloride in water, thus producing a sausage.

The sausage thus produced was of good quality, in particular with respect to color and firmness of the skin.

### Example 3

Example 1 and 2 were repeated with a different composition for the barrier layer.

A barrier layer composition comprising 4% Kapro P100, 10% sunflower oil, 2% HPMC, 5 % CaCl₂ and 79 % water was prepared in a bowl cutter as follows.

CaCl₂ was dispersed/dissolved in the water and Kapro was added. Then the oil was slowly added in the running bowl cutter. When oil was well emulsified HPMC was added and well dispersed. Acetic acid was added to reach pH 4.3. The contents of the bowl cutter were then transferred to a vacuum mixer for deaeration.

A sausage was prepared in the same manner as in the previous Examples, using the same casing composition.

The sausage thus produced was of good quality, in particular with respect to color and firmness of the skin.

### Example 4

Example 3 was repeated but the CaCl₂ was replaced by the same amount of CaCO₃. Because CaCO₃ has a low solubility compared to CaCl₂, delayed release of Ca²⁺, was obtained.

## Claims

1. Method for preparing a food product by means of co-extrusion, wherein a casing composition and a barrier composition are co-extruded as layers upon an edible filler thereby providing the edible filler with a casing layer and a barrier layer, and wherein said barrier layer is present between the edible filler and the casing layer; **characterized in that** following co-extrusion the food product is contacted with a solution of a metal salt, which comprises a calcium salt in an amount of between 0.1wt.% and 20wt.%.

2. Method according to claim 1, wherein the casing composition comprises collagen, a polysaccharide and water, and wherein preferably said polysaccharide comprises alginate.

3. Method according to claim 1 or 2, wherein the casing composition comprises collagen, expressed by determining the percentage of nitrogen (N) and multiplying it with 5.52, in an amount of between 2 and 7 wt.%, preferably between 3 and 6 wt.%; and, wherein the casing composition comprises a polysaccharide in an amount of between 1 and 5 wt.%, preferably between 2.5 and 4 wt.%, and wherein preferably said polysaccharide comprises alginate.

4. Method according to any of the previous claims wherein said casing composition comprises collagen and alginate, wherein the weight ratio of collagen to alginate is less than 1.2, preferably less than 1.1.

5. Method according to any of the previous claims, wherein the casing composition further comprises a liquid smoke derivative in an amount of between 0 and 10 wt.%, preferably at least 1 wt.%, and more preferably more than 3 wt.%.

6. Method according to any of the previous claims, wherein the barrier composition comprises one or more of a thickening agent; a metal salt; water; and an edible oil and/or fat.

7. Method according to any of the previous claims, wherein the co-extrusion takes place by means of a three-layer extruder.

8. Food product, especially a sausage, comprising an edible filler, a casing layer, and a barrier layer, wherein the edible filler is covered by the barrier layer at least partly, and wherein the barrier layer is covered by the casing layer at least partly, **characterized in that** the product is a co- extruded product manufactured by the method of claim 1.

9. Food product according to the previous claim, wherein said food product is a sausage.

10. Food product according to claim 8 or 9, wherein the casing layer includes a casing composition comprising collagen, a polysaccharide and water, and wherein preferably said polysaccharide comprises alginate.

11. Food product according to any of claims 8-10, wherein the casing layer includes a casing composition comprising collagen in an amount of between 2 and 7 wt.%, preferably between 3 and 6 wt.%, and wherein the casing composition comprises a polysaccharide in an amount of between 1 and 5 wt.%, preferably between 2 and 4 wt.%, and wherein preferably said polysaccharide comprises alginate.

12. Food product according to any of claims 8-11, wherein the casing layer includes a casing composition comprises a cross-linking agent in an amount of between 0 and 10 wt.%, and wherein preferably the cross-linking agent comprises a liquid smoke extract and/or one or a pyrolyzed sugar.

13. Food product according to any of claims 8-12, wherein the barrier layer includes a barrier composition comprises a thickening agent; a metal salt; water; an edible oil and/or fat.

14. Food product according to any of claims 8-13, wherein the co-extruded product is made by means of a three-layer extruder.

## Patentansprüche

1. Verfahren zur Herstellung eines Lebensmittelprodukts durch Coextrusion, wobei eine Ummantelungszusammensetzung und eine Sperrenzusammensetzung als Schichten auf eine verzehrbare Füllung coextrudiert werden, wodurch die verzehrbare Füllung mit einer Ummantelungsschicht und einer Sperrschicht versehen wird, und wobei die Sperrschicht zwischen der verzehrbaren Füllung und der Ummantelungsschicht vorhanden ist, **dadurch gekennzeichnet, dass**
das Lebensmittelprodukt nach der Coextrusion in Kontakt gebracht wird mit einer Lösung eines Metallsalzes, die ein Kalziumsalz in einer Menge von 0,1 Gew.-% bis 20 Gew.-% umfasst.

2. Verfahren nach Anspruch 1, wobei die Ummantelungszusammensetzung Kollagen, ein Polysaccharid und Wasser umfasst, und wobei das Polysaccharid vorzugsweise Alginat umfasst.

3. Verfahren nach Anspruch 1 oder 2, wobei die Ummantelungszusammensetzung Kollagen umfasst, ausgedrückt durch Bestimmung des prozentualen Stickstoffanteils (N) und Multiplikation des Anteils mit 5,52, in einer Menge zwischen 2 und 7 Gew.-%, vorzugsweise zwischen 3 und 6 Gew.-%, und wobei die Ummantelungszusammensetzung ein Polysaccharid in einer Menge zwischen 1 und 5 Gew.-%, vorzugsweise zwischen 2,5 und 4 Gew.-% umfasst, und wobei das Polysaccharid vorzugsweise Alginat umfasst.

4. Verfahren nach einem der vorstehenden Ansprüche, wobei die Ummantelungszusammensetzung Kollagen und Alginat umfasst, wobei das Gewichtsverhältnis von Kollagen zu Alginat kleiner ist als 1,2, vorzugsweise kleiner als 1,1.

5. Verfahren nach einem der vorstehenden Ansprüche, wobei die Ummantelungszusammensetzung ferner ein Flüssigrauchderivat in einer Menge zwischen 0 und 10 Gew.-%, vorzugsweise mindestens 1 Gew.-% und darüber hinaus bevorzugt mehr als 3 Gew.-% umfasst.

6. Verfahren nach einem der vorstehenden Ansprüche, wobei die Sperrenzusammensetzung eines oder mehrere der folgenden umfasst: ein Verdickungsmittel, ein Metallsalz, Wasser und ein Speiseöl und/oder Fett.

7. Verfahren nach einem der vorstehenden Ansprüche, wobei die Coextrusion durch einen Dreischicht-Extruder ausgeführt wird.

8. Lebensmittelprodukt, insbesondere eine Wurst, die eine verzehrbare Füllung, eine Ummantelungsschicht und eine Sperrschicht umfasst, wobei die verzehrbare Füllung wenigstens teilweise durch die Sperrschicht bedeckt ist, und wobei die Sperrschicht wenigstens teilweise durch die Ummantelungsschicht bedeckt ist, **dadurch gekennzeichnet, dass** das Produkt ein coextrudiertes Produkt ist, hergestellt durch das Verfahren nach Anspruch 1.

9. Lebensmittelprodukt nach dem vorstehenden Anspruch, wobei das Lebensmittelprodukt eine Wurst ist.

10. Lebensmittelprodukt nach Anspruch 8 oder 9, wobei die Ummantelungszusammensetzung Kollagen, ein Polysaccharid und Wasser umfasst, und wobei das Polysaccharid vorzugsweise Alginat umfasst.

11. Lebensmittelprodukt nach einem der Ansprüche 8 bis 10, wobei die Ummantelungsschicht eine Ummantelungszusammensetzung aufweist, die Kollagen in einer Menge zwischen 2 und 7 Gew.-%, vorzugsweise zwischen 3 und 6 Gew.-% umfasst, und wobei die Ummantelungszusammensetzung ein Polysaccharid in einer Menge zwischen 1 und 5 Gew.-%, vorzugsweise zwischen 2 und 4 Gew.-% umfasst, und wobei das Polysaccharid vorzugsweise Alginat umfasst.

12. Lebensmittelprodukt nach einem der Ansprüche 8 bis 11, wobei die Ummantelungsschicht eine Ummantelungszusammensetzung aufweist, umfassend ein Vernetzungsmittel in einer Menge zwischen 0 und 10 Gew.-%, und wobei das Vernetzungsmittel vorzugsweise ein Flüssigrauchextrakt und/oder einen oder einen thermisch zersetzten Zucker umfasst.

13. Lebensmittelprodukt nach einem der Ansprüche 8 bis 12, wobei die Sperrschicht eine Sperrenzusammensetzung aufweist, die ein Verdickungsmittel umfasst, ein Metallsalz, Wasser, ein Speiseöl und/oder Fett.

14. Lebensmittelprodukt nach einem der Ansprüche 8 bis 13, wobei das coextrudierte Produkt durch einen Dreischicht-Extruder erzeugt wird.

## Revendications

1. Procédé de préparation d'un produit alimentaire par co-extrusion, une composition de boyau et une composition formant barrière étant co-extrudées sous forme de couches sur une charge comestible de manière que la charge comestible soit pourvue d'une couche de boyau et une couche barrière, et ladite couche barrière étant présente entre la charge comestible et la couche de boyau ; **caractérisé en ce que**
après la co-extrusion, le produit alimentaire est mis en contact avec une solution d'un sel métallique, qui comprend un sel de calcium en une quantité comprise entre 0,1 et 20 % en poids.

2. Procédé selon la revendication 1, la composition de boyau comprenant du collagène, un polysaccharide et de l'eau, et de préférence ledit polysaccharide comprenant un alginate.

3. Procédé selon la revendication 1 ou 2, la composition de boyau comprenant du collagène, exprimé en déterminant le pourcentage d'azote (N) et en le multipliant par 5,52, en une quantité comprise entre 2 et 7 % en poids, de préférence entre 3 et 6 % en poids ; et, la composition de boyau comprenant un polysaccharide en une quantité comprise entre 1 et 5 % en poids, de préférence entre 2,5 et 4 % en poids, et de préférence ledit polysaccharide comprenant un alginate.

4. Procédé selon l'une quelconque des revendications précédentes, ladite composition de boyau comprenant du collagène et de l'alginate, le rapport pondéral du collagène sur l'alginate étant inférieur à 1,2, de préférence inférieur à 1,1.

5. Procédé selon l'une quelconque des revendications précédentes, la composition de boyau comprenant en outre un dérivé de fumée liquide en une quantité comprise entre 0 et 10 % en poids, de préférence d'au moins 1 % en poids, et plus de préférence supérieure à 3 % en poids.

6. Procédé selon l'une quelconque des revendications précédentes, la composition formant barrière comprenant un agent épaississant, un sel métallique, de l'eau et/ou une huile et/ou graisse comestible.

7. Procédé selon l'une quelconque des revendications précédentes, la co-extrusion ayant lieu au moyen d'une extrudeuse à trois couches.

8. Produit alimentaire, en particulier une saucisse, comprenant une charge comestible, une couche de boyau et une couche barrière, la charge comestible étant recouverte par la couche barrière au moins partiellement, et la couche barrière étant recouverte par la couche de boyau au moins partiellement, **caractérisé en ce que** le produit est un produit co-extrudé selon le procédé de la revendication 1.

9. Produit alimentaire selon la précédente revendication, ledit produit alimentaire étant une saucisse.

10. Produit alimentaire selon la revendication 8 ou 9, la couche de boyau comprenant du collagène, un polysaccharide et de l'eau, et de préférence ledit polysaccharide comprenant un alginate.

11. Produit alimentaire selon l'une quelconque des revendications 8 à 10, la couche de boyau comprenant une composition de boyau comprenant du collagène en une quantité comprise entre 2 et 7 % en poids, de préférence entre 3 et 6 % en poids, et la composition de boyau comprend un polysaccharide en une quantité comprise entre 1 et 5 % en poids, de préférence entre 2 et 4 % en poids, et de préférence ledit polysaccharide comprenant un alginate.

12. Produit alimentaire selon l'une quelconque des revendications 8 à 11, la couche de boyau comprenant une composition de boyau comprenant un agent réticulant en une quantité comprise entre 0 et 10 % en poids, et de préférence l'agent réticulant comprenant un extrait de fumée liquide et/ou un sucre pyrolysé.

13. Produit alimentaire selon l'une quelconque des revendications 8 à 12, la couche barrière comprenant une composition formant barrière comprenant un agent épaississant, un sel métallique, de l'eau, une huile et/ou une graisse comestible.

14. Produit alimentaire selon l'une quelconque des revendications 8 à 13, le produit co-extrudé étant réalisé au moyen d'une extrudeuse à trois couches.
